# EUROPEAN PATENT SPECIFICATION

(11) **EP 2 221 327 B1**
(45) Date of publication and mention of the grant of the patent: **16.04.2014**
(21) Application number: 08865151.8
(22) Date of filing: 03.12.2008
(51) Int. Cl.: B82Y 30/00, C08F 2/38, C08F 2/44, C08F 293/00, C08F 292/00

(54) **POLYMER-COATED FINE INORGANIC PARTICLE AND PROCESS FOR PRODUCING THE SAME**
FEINE ANORGANISCHE POLYMERBESCHICHTETE PARTIKEL UND HERSTELLUNGSVERFAHREN DAFÜR
PARTICULE INORGANIQUE FINE À REVÊTEMENT POLYMÈRE ET SON PROCÉDÉ DE PRODUCTION

(30) Priority: 04.12.2007 JP 2007313073
(43) Date of publication of application: 25.08.2010
(73) Proprietor: Tamagawa Seiki Co., Ltd., Nagano Pref. 395-8515 (JP)
(72) Inventor: HANDA, Hiroshi, Setagaya-ku Tokyo 1560045 (JP); ABE, Masanori, Ota-ku Tokyo 1450073 (JP); HATAKEYAMA, Mamoru, Kanagawa 2280803 (JP); SAKAMOTO, Satoshi, Kanagawa 2420001 (JP); NISHIO, Kosuke, Machida-shi Tokyo 1940012 (JP); MASAIKE, Yuka, Machida-shi Tokyo 1940012 (JP); KISHI, Hiroshi, Yamato-shi Kanagawa 2420006 (JP)
(74) Representative: Manitz, Finsterwald & Partner GbR
(86) International application number: PCT/JP2008/071927
(87) International publication number: WO 2009/081700

(56) References cited:
- JP-A- 2005 170 959
- JP-A- 2006 113 374
- JP-A- 2006 113 389
- JP-A- 2007 093 688
- JP-T- 2004 530 751
- JP-T- 2006 520 844
- US-A1- 2003 108 879
- MIKA YAMAGATA ET AL.: 'Design Sareta Kobunshi no Suiyoeki kara Chosei suru Jiseitai Fukugo Ryushi' POLYMER PREPRINTS vol. 53, no. 2, 2004, JAPAN, pages 3745 - 3746

## Description

### TECHNICAL FIELD

The present invention relates to a polymer coated magnetic fine particle and a method for preparing the same, and more particularly relates to a polymer coated magnetic fine particle and a preparation method thereof, which is able to provide mono-dispersion by coating one magnetic fine particle with a thin polymer layer.

### BACKGROUND OF INVENTION

Complex particles which comprise inorganic particles in nano-meter size with polymer coating on the surfaces thereof are applied in various field and have been utilized so far. Recently in bio-technology and medical fields, studies on various applications of inorganic fine particles such as nano-meter sized magnetic fine particles coated with polymer on the surface thereof become particularly popular.

Such studies on the inorganic fine particle coated with polymer may include applications for bio-sensors and affinity carriers, and the studies have been extensively made particularly for about magnetic fine particles as an image forming agent for a magnetic resonance diagnosis apparatus (MRI) and a carrier for magnetic based drug delivery system (DDS).

In the above applications, a shape and size of the inorganic fine particle composing the polymer coated inorganic fine particle are desired to be highly uniform in order to exhibit higher and higher functionalities thereof. It is also desired that each of the inorganic fine particles is coated uniformly by the polymer as well as that the inorganic fine particles provide a mono-dispersed state or nearly mono-dispersed state when the polymer coated inorganic fine particles are dispersed in a particular solvent.

Particularly, when the inorganic fine particle is a magnetic fine particle, it is preferred that the particle diameter of the polymer coated magnetic fine particle is small as possible while the magnetization thereof is larger as possible. In order to attain such conditions, the magnetic fine particles composing the polymer coated inorganic fine particles may have the smallest average particle diameter within the range where the particle may hold their magnetization as a ferromagnetic substance; the particles may be uniform; and each of the magnetic fine particles may be thinly coated by the polymer.

To realize the polymer coated inorganic fine particles satisfying such requirements, it is necessary to form inorganic fine particles suitable to the above requirements and to coat the inorganic fine particles thinly by the polymer using well-controlled method. Such coating method may include a method which may coat the inorganic fine particles by the polymer by a living radical polymerization in which a polymerization initiator is fixed on the surface of the inorganic fine particles and polymerization is started by the polymerization initiator fixed on the surface of the fine particles in a monomer solution.

In non-patent literatures 1-10, various studies are described about the method in which the polymerization initiator is fixed on the fine particle surface, then the living polymerization is initiated from the fine particle surface to coat each of the fine particles by the polymer. Among the above literatures, the non-patent literature 1 obtains polystyrene coated ferrite particles with an average particle diameter of 9nm by fixing 3-chloro-propionic acid on surfaces of MnFe₂O₄ fine particles as the polymerization initiator and heating and stirring in the styrene solution. In the non-patent literature 2, magnetite particles with grown polystyrene from the surface by fixing a living free radical polymerization initiator having a phosphate group while carried by a nitrosyl group on magnetite particles with a particle diameter of 10nm, and then heating in a styrene solution. In the non-patent literature 3, magnetite particles having poly-3-vinyl pyridine grown form the surface thereof are prepared as well as magnetite particles having polystyrene grown from the surface thereof similar to the non-patent literature 2.

In the non-patent literature 4, the polymer coating of γ (gamma)-Fe₂O₃ nano-particles coated with oleic acid obtained from thermal decomposition of Fe(CO)₅ in di-n-octyl ether under the presence of oleic acid. The core-shell structure with polystyrene grown from the surface of γ (gamma)-Fe₂O₃ nano-particles of an average particle diameter of 4 nm was prepared by first combining the polymerization initiator with some surface activities to the γ (gamma)-Fe₂O₃ nano-particles and then polymerizing styrene using the polymerization initiator. In the non-patent literature 5, preparation of the core-shell structure coated with polystyrene is described; the core-shell structure is prepared by first fixing 2-bromo-2-methyl-propionate on the surface of γ (gamma)-Fe₂O₃ nano-particle of about 10 nm as the polymerization initiator and then starts the atom-transfer radical polymerization. In the non-patent literature 6, the core-shell nano-particle of γ (gamma)-Fe₂O₃ coated with polymethylmethacrylate by introducing functional groups on the particle surface through treatment of γ (gamma)-Fe₂O₃ nano-particle of the average particle diameter of 4nm with a capronic acid salt, further incorporating chloromethylphenylethyldimethylchlorosilane into the particle surface and then causing atom-transfer polymerization using the same as the polymerization initiator.

In the non-patent literature 7, it is disclosed that magnetic fine particles being stable and exhibiting reversible change according to temperature change may be prepared by adsorbing 2-bromo-2-methyl propionate on the surface of magnetite fine particle with number averaged particle diameter of 10 nm being precipitated from alkaline condition, initiating polymerization by using the same as the polymerization initiator to coat the magnetite fine particles with poly-2-methoxy-ethyl-methacrylate. In the non-patent literature 8, it is disclosed that a radical initiator having a phosphoric acid group is fixed onto the surface of magnetite particles of 10nm or 25nm with a nitroxide and titan oxide fine particle and the polymerization is initiated from the surface of the particle to cover the fine particles by polystyrene or poly (3-vinylpyridine). In the non-patent literature 9, a novel method of condensation of triethoxysilane having polymerization initiator site with ligand exchange reaction is disclosed; the novel method comprises the steps of binding a polymerization initiator through a covalence bond to the surface of magnetite fine particles of an average particle diameter of 9 nm and initiating atom transfer radical polymerization which starts the polymerization from the particle surface to prepare nano-sized magnetic particles having covalence-bonded polystyrene shell. In the non-patent literature 10, a production method of fine particles covered by block co-polymer between polyethylmethacrylate and poly-2-hydroxy-ethyl-methacrylate as a magnetite magnetic fine particle having a core-shell-corona structure for delivering block hydrophobic drugs by fixing 2-bromo-2-methyl propionate on the surface of magnetite magnetic fine particle.

As described above, the non-patent literatures 1-9 disclose various kinds of polymer coating methods by which the polymer coating is formed using the living radical polymerization or by which the polymerization initiator is fixed onto the inorganic fine particles and then initiating living radical polymerization from the fine particle surface to cover the particles by polymer. However, the methods disclosed in the non-patent literatures have the insufficient feature, for the purpose of precise control of the polymer coating, which is the polymer coating is thick when compared to the particle diameter and can not be able to coat each of fine particles evenly.

Moreover, in a patent literature 1 (Japanese Patent Laid-Open No. 2006-328309), it is disclosed that a molecular weight distribution of a polymer chain coating the magnetic fine particles may be narrow by conducting the living radical polymerization by the living radical polymerization with the initiator fixed on the surface of the magnetic fine particle. In this literature, it is disclosed that organic halogen compounds or halogenated sulfonyl compounds which have halogens on the particle surface providing initiation points of the polymerization, the particle being magnetic fluid FERRICOROID HC-50 (an ensemble of super-paramagnetic substance of a primary particle diameter of 5 nm) and using the living radical polymerization of styrene, methyl methacrylate or benzyl methacrylate as mono-polymerization or methyl methacrylate/dimethylaminoethylmethacrylate, benzyl methacrylate/methyl methacrylate-methyleneglycoldimethacrylate as a co-polymerization to prepare magnetic polymer particles of the final particle diameter of 80-170 nm and is disclosed that the polymer coating having narrow polymer molecular weigh distribution may be obtained. This patent literature also describes the iniferter polymerization which as one example of the living radical polymerization which uses an initiator having high chain transfer capability.

However, the polymer coated magnetic fine particles prepared by the above described methods may be able to make narrow in the polymer molecular weight distribution thereof, it could not be considered that the coating of the fine particles by the polymer was well controlled nevertheless such that it could not achieve the polymer coated magnetic fine particle in the monodispersed state in which the magnetic fine polymers were coated one-by-one.

In a patent literature 2 (Japanese Patent Laid-Open No. 2007-56094), thermal-responsible polymer coating of magnetic fine particles by living polymerization by using water-soluble N,N-diethyl polymerization initiator. In this literature, it makes easy to conduct living radical polymerization in an aqueous solution and formation of block polymer is described. The block polymer is formed from acrylic acid, methacrylic acid, and N-isopropyl acryl amide which is a thermal responsible polymer. In addition, a complex of polymer and magnetic substance is formed by the synthesis of ferrite in aqueous solution including this polymer and thermal responsibility thereof was examined. However, in the patent literature 2, the polymerization initiator is present in a monomer solution rather than fixed on the magnetic fine particle surface such that the method disclosed was not the method suitable for applying the polymer coating on the inorganic fine particle one by one.

When the inorganic fine particle is a magnetic fine particle, the particle diameter is desired to be even as well as small and to be in the range for ensuring the ferromagnetic properties. In these conditions, strong magnetic aggregation force is applied. It is desired that each of the magnetic fine particles may be coated by the polymer while the polymer coated magnetic fine particles obtained become a monodispersed state. The above non-patent literatures 1-10 except for the non-patent literature 7 and a part of the disclosure of the non-patent literature 8 each describe the polymer coating of the particle diameter to be about 10nm or less. When the particle diameter of the ferrite particles becomes to be about 10 nm or less, the ferrite particle still has magnetic properties while weakening the magnetic properties when compared to the normal ferromagnetic property referred as superparamagnetic property. Such superparamagnetic fine particles have weak inter particle aggregation force and it is easily dispersed in solvents such that it is easy to coat the fine particles one-by-one after the fine particles are dispersed in the solvent.

As described above, though the non-patent literatures 1-10 disclose the method for coating the super-paramagnetic fine particles in weak magnetic aggregation force among the particles, the above non-patent literatures 1-10 does not suggest the method for coating the ferromagnetic fine particles one by one by polymer. Here, in the non-patent literature 7, it is noted that the magnetic fine particles slightly oversized from 10 nm are described; however, the particles is described to exhibit the superparamagnetic properties as the other above non-patent literatures. Furthermore, in the non-patent literature 8, there is the description about the surface coating of magnetite particles having the average particle diameter of 25 nm as well as the description of the surface coating of the paramagnetic fine particles having the average particle diameter of 10nm. However, the surface coating method applied to the superparamagnetic fine particle having the average particle diameter of 10 nm is merely applied to the magnetite particles having the average particle diameter of 25 nm as is such that the method does not enable the one by one polymer coating of the ferromagnetic fine particles under the dispersed state. Furthermore, as described above, the patent literatures 1 and 2 could not be able to coat the particles one by one by the polymer. As such any methods described in each literature are not a suitable methods for coating thinly one by one the ferromagnetic fine particles.
Patent Literature 1: Japanese Patent Laid-Open No. 2006-328309
Patent Literature 2: Japanese Patent Laid-Open No. 2007-56094
Non-patent Literature 1:J. Am. Chem. Soc. 2002, 124, 14312-14313
Non-patent Literature 2: Chem. Mater. 2003, 15, 3-5
Non-patent Literature 3: Macromolecules, 2004, 37, 2203-2209
Non-patent Literature 4: J. Polymer Sci. A: Polymer Chem. 2005, 48, 3675-3688
Non-patent Literature 5: Nano Lett. 2003, 3 789-793
Non-patent Literature 6: Solid State Sci. 2004, 6, 879-885
Non-patent Literature 7: Macromolecules 2006, 39, 3469-3472
Non-patent Literature 8: Sci. Technol. Adv. Mater. 2006, 7, 617-628
Non-patent Literature 9: Eur. Polymer J. 2003, 43, 762-772
Non-patent Literature 10: Macromol. Rapid Commun. 2006, 27, 2107-2112

US 2003/0108879 A1 relates to a sensor for binding a molecule in an aqueous sample in an assay, wherein the sensor comprises i) a substrate surface, ii) a layer on the substrate surface comprising polymer chains having two termini and a water-soluble or water-dispersible intermediate segment between the termini, wherein one terminus is free and the other terminus is bound to the substrate surface, wherein the intermediate segment contains groups for the attachment of a probe for binding the molecule, wherein the groups are capable of attaching the probe without first being subjected to a chemical treatment to activate said for probe attachment, and iii) a probe for binding the molecule.

JP 2006-113,389 A discloses electrophoretic particles comprising two different polymer chains imparting dispersibility and electrostatic chargeability onto the surfaces of color particles.

### SUMMARY OF INVENTION

### TECHNICAL PROBLEM TO BE SOLVED BY INVENTION

Any of the methods disclosed in each of the above described literatures was insufficient in providing even coating to one particle which may be achieved by precise control of the polymer coverage.

An object of the present invention is to provide a polymer coated magnetic fine particles and a method for preparing the same by controlling the polymerization reaction precisely and by providing a thin coating layer on the magnetic fine particles. An another object of the present invention is to provide a polymer coated magnetic fine particles and a method for preparing the same; the polymer coated magnetic fine particles may be able to maintain a mono-dispersed state by controlling the polymerization reaction precisely and by providing a thin coating layer one by one on the magnetic fine particles. Further another object of the present invention is to provide a polymer coated magnetic fine particles and a method for preparing the same; the polymer coated magnetic fine particles, which are particularly to be ferromagnetic particles, may have small particle diameters as well as large magnetization by thinly and evenly coating one by one ferromagnetic fine particles which have a sufficiently small particle diameter in the range providing the magnetization as the ferromagnetic substance.

### MEANS FOR SOLVING PROBLEM

The polymer coated magnetic fine particle of the present invention comprises an magnetic fine particle having an average particle size between 4 nm and 500 nm, wherein the value of the ratio of the standard deviation of the particle size distribution to the average particle size is not more than 0.2, and a coating layer covering the magnetic fine particle characterized by;
an iniferter is fixed on a surface of the magnetic fine particle through an atomic group X such that
a grafted chain is formed on the surface of the magnetic fine particle by a polymerization reaction with the iniferter as an initiator such that the magnetic fine particle is coated with a polymer layer;
wherein the iniferter is defined by the following general formula: 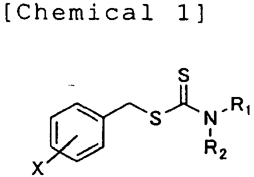 wherein X is a hydrophilic atomic group being capable of binding to a surface of the magnetic fine particle, R1 and R2 are each independently selected from a mono-valent hydrocarbyl group which is formed by removing one hydrogen atom from hydrocarbon.

X of the iniferter is the atomic group which includes a functional group being capable of combining to the surface of the magnetic fine particle or of the surface of the magnetic fine particle and plays the role to fix the iniferter on the surface of the magnetic fine particle. Here, the iniferter is an initiator which has a chain transfer function and/or a primary radical termination function, i.e. initiator-transfer agent-terminator and for example, the iniferter R1-R2 gets a monomer M by an insertion reaction and a radical may be sequencially transferred to a top of the polymerization with respect to proceeding of the polymerization reaction.

In the present invention, the functional group being capable of binding to the surface of the above magnetic fine particle may include a carboxyl group, a mercapto group, phosphoric group, a phosphite group, a sulfonic group, and a phenol group etc.

Further in the present invention, the functional groups being capable of binding to the surface of the above magnetic fine particle may be preferred to have a group which forms a silanol group by hydrolysis. It was found that the iniferter including such group may bind to the magnetic fine particle surface. In addition, the group which forms a silanol group by hydrolysis is present in a silane coupling agent and then such iniferter may be obtained by combining the silane coupling agent to the iniferter to obtain the iniferter having such groups. The group forming silanol group by the hydrolysis may have the form of -Si(OR₁)(OR₂)(OR₃) or may have the form of -Si(OR₁)(OR₂)R₃. The group forming silanol group by the hydrolysis may also have the form of -Si(OR₁)R₂R₃. Here, R₁, R₂, or R₃ is independently a hydrocarbyl group formed by removing one hydrogen atom from hydrocarbon and may be a methyl group or an ethyl group.

Such iniferter is fixed to the surface of the magnetic fine particle and then a drafted chain is formed on the surface of the magnetic fine particle by the polymerization reaction using the iniferter as the initiator so that the polymer coating may be formed on the surface of the magnetic fine particle with under the sufficient control.

The above magnetic fine particle of the present invention has an average particle diameter or size, respectively, from 4 nm to 500 nm and it has a ratio of the standard deviation of the particle diameter distribution and the average particle diameter of not more than 0.2. The magnetic particle in the above scale may provide excellent performances in various applications such as for example an affinity carrier, a medical purpose, and biotechnology etc.

Further according to the present invention, the detailed control of thickness of the polymer coating may become possible depending on the particle diameter of the fine particle and the purpose thereof, and hence the magnetic fine particle with the thin polymer coating of which thickness is not more than 10nm has been realized. By controlling the polymer coating thickness being not more than 10nm, a volume ratio of the magnetic fine particle may be enhanced and as the result thereof the performance of the polymer coated magnetic fine particle has been improved. Now, in the present invention, the polymer coating is formed by the polymerization reaction using the iniferter as the initiator being present and fixed on the magnetic fine particle and then the significant feature is to coat thinly and evenly the magnetic fine particle. Therefore, there is particular limitation for the under limit of the polymer coating; however, in order to lower the mutual interaction between the magnetic fine particle by the polymer coating, it may be more preferred that the thickness of the polymer coating may be set not less than 0.5nm.

Furthermore, according to the present invention, the polymer coated magnetic fine particle which is coated individually and one by one may be obtained while making it possible to maintain the mono-dispersed state. As the result, the individual fine particles may be dispersed in a solvent as very small particles and therefore such particles can pass through small spacing. Then the polymer coated magnetic fine particle may be obtained with quite desirable morphology for various applications such as medical and biotechnology.

In the present invention, the polymer coating may include a block copolymer including polymers of 2 or more kinds. At least one block in the block copolymer may have a functional group which can fix a bio-substance. As such the polymer coated fine particle may be obtained. Here in the present invention, when the polymer coating may be a block polymer including polymers of 2 or more kinds, the polymerization reaction using the iniferter fixed on the magnetic fine particle surface as the initiator is conducted at the formation of the first polymer layer.

It may be possible to use the magnetic properties in various forms. Such magnetic fine particle, ferrite fine particles may be used. The ferrite fine particle has high chemical stability and is suitable for various application. Moreover, there is a significant advantage in which the ferrite fine particle may be controlled in the particle shape and the particle diameter by the method through thermolysis of oleic acid.

As for the ferrite fine particle, the average particle diameter not less than 4 nm while having the ratio of the standard deviation of the particle diameter distribution to the average particle diameter not more than 0.2 is used. By using such ferrite fine particle, the polymer coated magnetic fine particle including ferromagnetic fine particle of large magnetization may be realized.

The iniferter compound of the present invention has another feature that the iniferter compound includes an atomic group being capable of binding to the magnetic fine particle surface by forming a silanol group by hydrolysis. It was found that the magnetic fine particle may be efficiently coated with polymer by fixing such iniferter compound onto the fine particle surface upon coating the magnetic fine particle via the polymerization reaction.

Such iniferter has the following chemical formula: 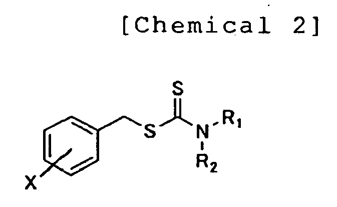 wherein R1 and R2 are each independently selected from a hydrocarbyl group which is formed by removing one hydrogen atom from hydrocarbon and X is a hydrophilic atomic group being capable of binding to a surface of the inorganic fine particle.

The iniferter containing the group forming a silanol group by hydrolysis while having the atomic group being capable of binding to the magnetic fine particle surface may be prepared by binding a silane coupling agent to the substance exhibiting the function of the iniferter.

The method for preparing the polymer coated magnetic fine particle as defined above comprises the steps of:
fixing onto the surface of magnetic fine particles having an average particle size between 4 nm and 500 nm, wherein the value of the ratio of the standard deviation of the particle size distribution to the average particle size is not more than 0.2, dispersed in a dispersed solution the iniferter having the following chemical formula: 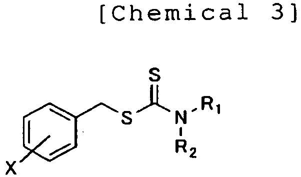 wherein X is a hydrophilic atomic group being capable of binding to a surface of the magnetic fine particle, R1 and R2 are each independently selected from a hydrocarbyl group which is formed by removing one hydrogen atom from hydrocarbon; and
coating one by one the magnetic fine particles with the polymer layer by adding a monomer to the dispersed solution of the magnetic fine particles and then forming graft chains on the surface of the ferrite particle by the polymerization reaction using the iniferter fixed on the magnetic fine particles.

### [TECHNICAL ADVANTAGE OF INVENTION]

According to the present invention, the polymer coated magnetic fine particles with the features of being formed the graft chains of the polymer on the magnetic fine particle surface, being able to control the polymerization precisely while being coated thinly one by one with the polymer.

### [MOST PREFERRED EMBODIMENT FOR PRACTICING INVENTION]

Hereinafter, the present invention will be described in detail by referring to drawings while describing practical embodiments.

### 1) SURFACE COATING PROCESS

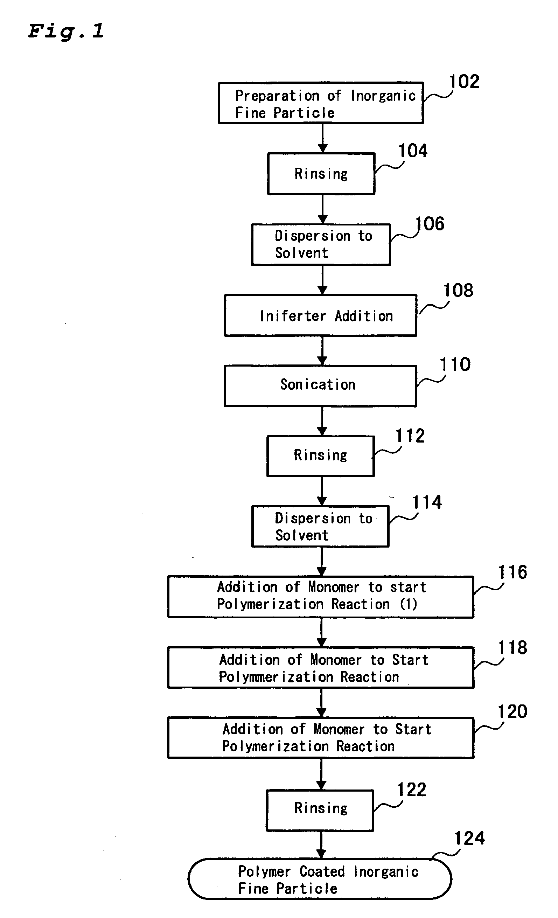

Fig. 1 shows major process steps for preparing the polymer coated magnetic fine particles in one practical embodiment of the present invention. In Fig. 1, the magnetic fine particle is synthesized in the step 102. It is preferred that the magnetic fine particle of the present invention may be particles having the precisely controlled particle diameter and having well matched particlediameter.

Such magnetic fine particles may be prepared by for example the thermolysis in a high boiling point solvent the oleic acid iron complex obtained by iron chloride and sodium oleate. By this method, the magnetic fine particle such as ferrite fine particle being precisely controlled in the particle diameter thereof while having well matched particle diameter.

The magnetic fine particles as such prepared are rinsed in the step 104 to remove unnecessary ingredients. For example, with respect to the ferrite fine particle prepared by the thermolysis of the oleic acid iron complex in the high boiling point solvent, the repeating process of magnetically recovering after precipitating the ferrite fine particle by adding 2-methoxy ethanol may rinse the ferrite fine particles.

Next in the step 106, the magnetic fine particles are dispersed in a solvent to prepare the dispersion solution followed by addition of the iniferter in the step 108 to this dispersion solution further followed by sonication in the step 110 to fix the iniferter onto the surfaces of the magnetic fine particles. The iniferter used here includes the functional group allowing to be bound to the surfaces of the magnetic fine particles. When the magnetic fine particles are the ferrite fine particles prepared by the thermolysis of the oleic acid iron complex in the high boiling point solvent, the rinse solvent may include for example such as 2-methoxy ethanol. Toluene may be used as the solvent for dispersing the ferrite fine particles.

As described above, the magnetic fine particles with the fixed iniferter thereon is rinsed in the step 112 to remove non-reacted iniferter. The rinse step may be conducted by the similar sequence of the former rinse step 104.

Next, the magnetic fine particles being fixed with the iniferter which is rinsed in the step 114 are again dispersed in the solvent to prepare the dispersion solution followed by the addition of monomer in the steps of 116-120 to coat the inorganic fine particles by the polymer by each polymerization reactions. Here, the embodiment using the 3 steps of the polymerization (1)-(3) is described; however, the steps may not limited to the 3 steps and block copolymers of plurality kinds may be prepared by adopting a plurality of necessary steps. As described above, the inorganic fine particles may be coated by well controlled multi-layered block copolymer.

Here, in this embodiment, it is important that the shape of the magnetic fine particle used is even and the particle diameter of the magnetic fine particle used is well matched so as to control the polymer coating more precisely. According to the present invention, the average particle diameter of the magnetic fine particles is not less than 4nm while not more than 500nm and the value of division of the standard deviation of the particle diameter distribution by the average particle diameter is not more than 0.2 for controlling precisely the polymer coating of the magnetic fine particles. It is preferred that the magnetic fine particles have the average particle diameter from 4nm to 30nm and the value of the standard deviation of the particle diameter distribution by the average particle diameter is not more than 0.2 for precise control of the polymer coating of the magnetic fine particles. In measurement of the particle diameter of the magnetic fine particles, the particle diameter may be determined by measuring the particle diameter of an electronic microphotography of the inorganic fine particles. Subsequently to the above polymerization reaction, the polymer coated magnetic fine particles is obtained after the rinse in the step 122.

### 2) INORGANIC FINE PARTICLE

In the present invention, it is preferred that the magnetic fine particle may have a precisely controlled particle size with well matched particle shape and particle diameter. The method for preparing such magnetic fine particles may include the preparation method preparing thereof in aqueous solutions or in organic solutions, and for example, the method using the thermolysis reaction of oleic-metal complex salt in oleic acid. In this synthesis of the ferrite fine particle using the thermolysis reaction, sophisticated control of the reaction conditions may provide the ferrite fine particles with the precisely controlled particle size and the well matched particle diameter. In addition, this method also has another feature that the large amount synthesis of the fine particle is possible within relatively short time duration. Magnetic fine particles to be coated by the present invention may include ferrites such as magnetite and mag-hematite as well as other magnetic fine particles, particles for biosensors, or particles for quantum dots and the like, and the present invention may be applied to various functional particles.

### 3) SYNTHESIS USING INIFERTER

The synthesis by using the iniferter is initiated by applying heat or light to the initiator under the presence of monomers and then the polymerization starts as the initiator as the start point thereof. Since chain transfers or when there is no termination reactions or no termination reaction when there are no bi-reactions, a number averaged molecular weight increases with the direct proportion with respect to a reaction ratio, i.e. a conversion ratio. Using this nature, the number averaged molecular weight of the produced polymer may be controlled. In addition, the synthesis may be restarted from the top end of the growth by adding monomers to the reaction system that the synthesis has ended once. When this nature is applied, the polymerization of a certain kind of a monomer is conducted, and after that, it may be possible to conduct the synthesis using other kinds of monomers; when such process is repeated, it is possible to form the coating by the block synthesized polymer. Here, if such as for example, the termination reaction between each of the growing top ends occurs as the bi-reaction in the synthesis using the iniferter, the above advantage may not be positively used; however, the above described side reaction may be prevented in the present invention by using the iniferter described in the following section 4. This iniferter separates to active species having radicals and leaving groups by an even dissociation; the radical polymerization of the monomers is initiated by the active species and the polymerization proceeds by transferring the radical to the end one after another. To the end of the polymerization, radicals of the leaving groups bind weakly for pushing forward the polymerization reaction while keeping stability of the radicals such that the above described bi-reaction may be prevented. As described hereinbefore, the iniferter plays particularly important role in the precise control of the polymerization.

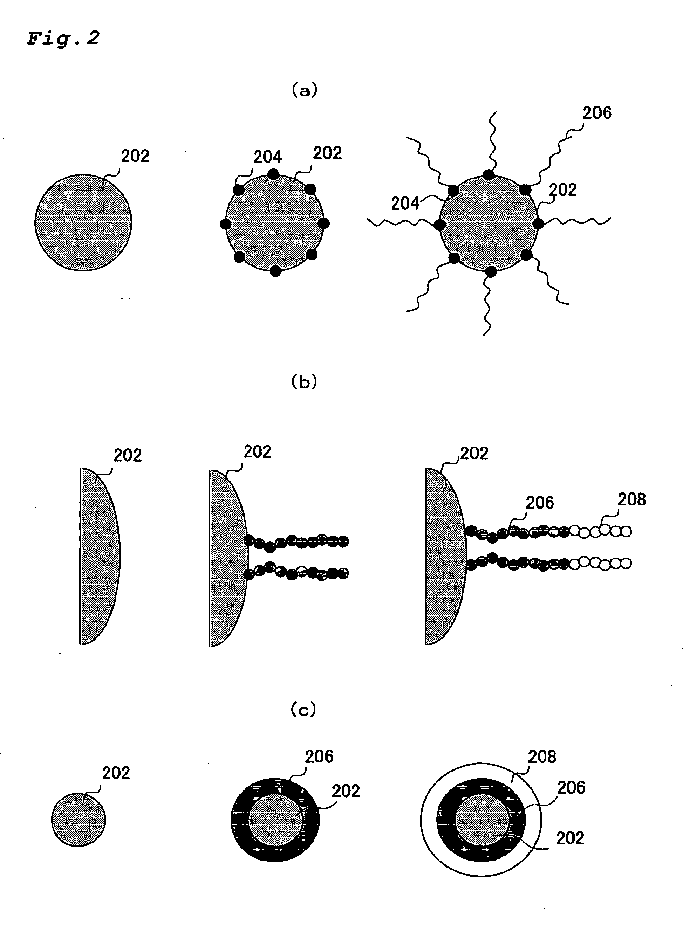

Fig. 2 shows a schematic diagram of the condition in which the above described iniferter is fixed to the magnetic fine particles and the magnetic fine particles are coated by the polymer by the polymerization using the present iniferter as the polymerization initiator. In Fig. 2 (a), the iniferter 204 as the polymerization initiator is fixed on the surface of the magnetic fine particle 202 and the monomer polymerizes from the fixed iniferter as the starting point to form the first polymer 206 on the magnetic fine particle surface. Fig. 2 (b) shows a schematic diagram when the second polymer is formed by polymerizing the first polymer formed in the magnetic fine particle 202 to form the second polymer 208. Fig. 2 (c) shows a schematic cross section of the polymer coated magnetic fine particle as such prepared. First by the living radical polymerization, a certain monomer is polymerized to coat the magnetic fine particle and subsequently an other kind of monomer 208 being different from the monomer for the former polymerization is added so as to conduct for example the living radical polymerization and hence the above described block copolymer may be prepared.

### 4) INIFERTER

In the present invention, the compound defined by the following chemical formula is used as the iniferter: 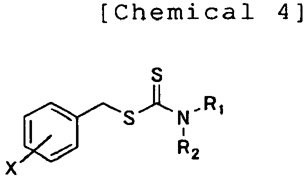 wherein R₁ and R₂ are each independently selected from a hydrocarbyl group which is formed by removing one hydrogen atom from hydrocarbon and an ethyl group of carbon atom number of 2 may be particularly useful. Here, R₁ and R₂ may be selected each independently from an alkyl group of carbon atom number being not more than 5; among the described alkyl group, an ethyl group may be particularly preferred to use and an methyl group may be used preferably. X is a hydrophilic atomic group binding suitably to the magnetic fine particle surface and the iniferter binds to the polymer via the atomic group. Such X may preferable to be for example carboxyl group or an atomic group including the carboxyl group; furthermore, the atomic group including the carboxyl group including a plurality of carboxyl groups or an other hydrophilic groups such as a hydroxyl group or an amino group as well as the carboxyl group may be preferred.

Furthermore, the above X in the iniferter may particularly be an atomic group including the group for forming a silanol group by the hydrolysis. For example, it is preferred that the iniferter is bound with the silane coupling agent. As described above, when the iniferter including the group for forming the silanol group by the hydrolysis, the magnetic fine particles to which the iniferter is strongly and stably bound thereto may be obtained.

Such iniferter separates the following active species formed by an even dissociation when starting the polymerization: 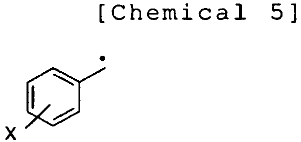 and the following leaving group: 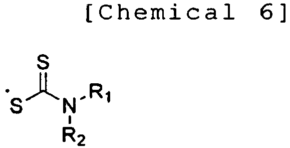 The radical polymerization is initiated by the radical including the active species and the polymerization proceeds as the radical transfers to the terminal end one after another. By combining weakly the stable leaving group to the terminal end where the radical is present, the stability of the radical in the active species may be kept so that the side reaction may be prevented. Here, the contribution of thiocarbonyl group is to delocalize the radical on the sulfer atom and then the radical of the leaving group is thought to be relatively stable.

By the method of the present invention that the iniferter described above is fixed on the magnetic fine particle and is used as the initiator, the precise control of the polymer coating onto the magnetic fine particle may be achieved and the coating of the magnetic fine particles one by one by the polymer may be achieved.

### 5) MONOMER AND POLYMER

In the present invention, the monomer used for the polymer coating of the magnetic fine particle via the polymerization may be readily selected depending on particular applications from the monomers allowing the radical polymerization. In this case, the magnetic fine particle may be coated by using only one monomer and alternatively, the magnetic fine particles may be coated by block polymerized polymers. According to the present invention, when polymers are brought to the block co-polymerization, each blocks may be controlled precisely.

Such monomers may include for example styrene, α (arpha)-, o-, m-, p-alkyl, alkoxyl, halogen, haloalkyl, nitro, cyano, amido, ester substitution of styrene; polymerizable unsaturated aromatic compounds such as for example styrene-sulfonic acid, 2,4-dimethyl-styrene, para-dimethyl amino-styrene, vinyl-benzyl-chloride, vinyl-benzaldehyde, indene, 1-methyl-indene, acenaphtharene, vinyl-naphtharene, vinyl-anthracene, vinyl-carbazol, 2-vinyl-pyridine, 4-vinyl-pyridine, 2-vinyl-fluorene; alkyl (metha) acrylates such as for example methyl (metha) acrylate, ethyl (metha) acrylates, n-propyl acrylate, n-buthyl acrylate, 2-ethyl-hexyl (metha) acrylate, stearyl (metha) acrylate; unsaturated mono-carboxylic acid esters such as for example methyl crotonate, ethyl crotonate, methyl cinnamate, ethyl cinnamate; fluoro-alkyl (metha) acrylates such as for example tri-fluoro-ethyl (metha)acrylate, penta-fluoropropyl (metha) acrylate, hepta-fluoro-buthyl (metha) acrylate; siloxanyl compounds such as for example tri-methyl-siloxanyl-dimethyl-silil-propyl (metha) acrylate, tris-(tri-methyl-siloxanyl)-silyl-propyl (metha) acrylate, di-(metha) acryloyl-propyl-dimethyl-silyl-ether; hydroxy-alkyl (metha) acrylates such as for example 2-hydroxy-ethyl (metha) acrylate, 2-hydroxy-propyl (metha) acrylate, 3-hydroxy-propyl (metha) acrylate, ethylene-glycol (metha) acrylate, glycerol (metha) acrylate; amine containing (metha) acrylates such as for example dimethyl-amino-ethyl (metha) acrylate, diethyl-amino-ethyl (metha) acrylate, t-butyl-amino-ethyl (metha) acrylate, hydroxy-alkyl-esters of unsaturated carboxylic acid such as for example 2-hydroxy-ethyl-crotonate, 2-hydroxy-propyl-crotonate, 2-hydroxy-propyl-cinnamate, unsaturated alcohols such as for example (metha) allyl-alcohol, unsaturated (mono) carboxylic acids such as for example (metha) acrylic acid, crotonic acid, and cinnamic acid; epoxy containing (metha) acrylic acid esters such as for example glycidyl (metha) acrylate, glycidyl-alpha-ethyl-acrylate, glycidyl-alpha-n-propyl-acrylate, glycidyl-alpha-n-butyl-acrylate, 3,4-epoxybutyl-(metha) acrylate, 6,7-epoxy-hepthyl-(metha) acrylate, 6,7-epoxy-heptyl-alpha-ethyl-acrylate, o-vinyl-benzyl-glycidyl-ether, m-vinyl-benzyl-glycidyl-ether, p-vinyl-benzyl-glycidyl-ether, β (beta)-methyl-glycidyl (metha) acrylate, β (beta)-methyl-glycidyl (metha) acrylate, β (beta)-propyl-glycidyl (metha) acrylate, β (beta)-ethyl-glycidyl-alpha-ethyl acrylate, 3-methyl-3,4-epoxy-butyl (metha) acrylate, 3-ethyl-3,4-epoxy-butyl (metha) acrylate, 4-methyl-4,5-epoxy-pentyl (metha) acrylate, (metha) acrylic acid-5-methyl-5,6-epoxy-hexyl, β (beta)-methyl-glycidyl (metha) acrylate, 3-methyl-3,4-epoxybutyl (metha) acrylate; and mono- or di-esters thereof.

### (Example 1)

### 1) Preparation of ferrite particle

The ferrite particle used for the magnetic fine particle corresponding to the core of the polymer coated magnetic fine particle as prepared according to the method described in Nature Mater. 2004, 3, 891-895 and iron chloride and sodium oleate were reacted to obtain oleic acid-iron complex and then the complex was subjected to thermolysis in a high boiling point solvent.

The ferrite fine particle obtained was observed by using a transmission electron microscope (TEM, H-7500, Hitachi High-Technologies Corporation., Ltd.). As the result, the ferrite particles of a particle diameter of 19 nm in an almost spherical shape were obtained and a standard deviation of the particle size distribution was 3.2 nm such that the particle size was confirmed to have excellently matched.

### 2) Synthesis of iniferter

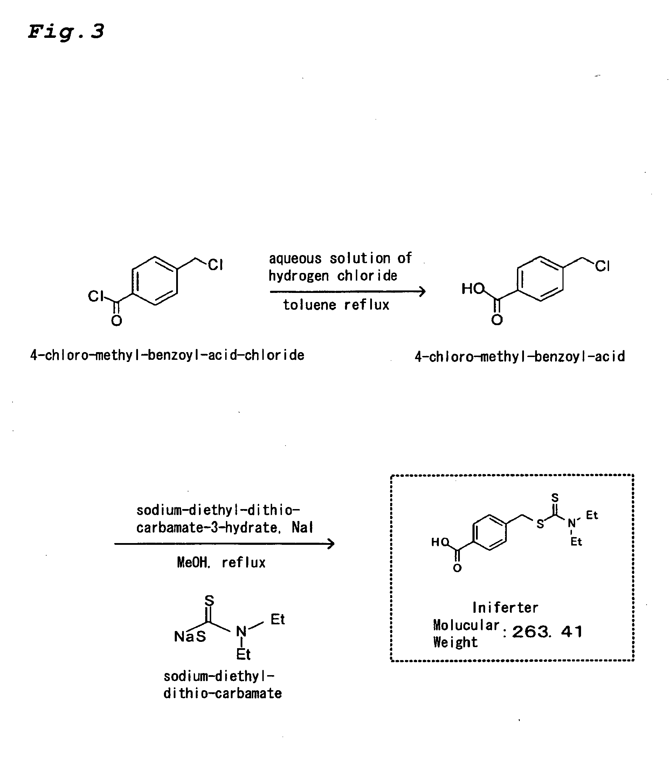

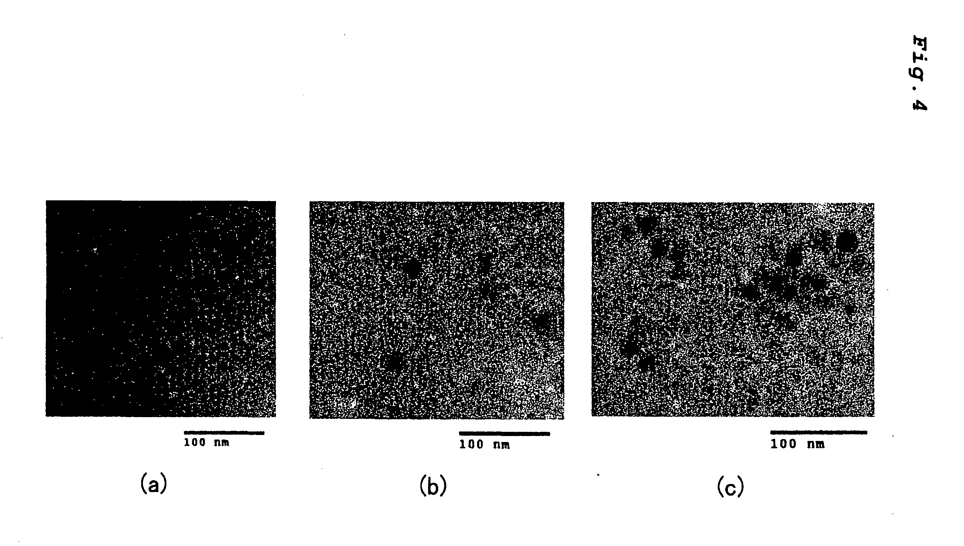

An iniferter was synthesized according to Fig. 3. As shown in Fig. 3, 4-chloro-methyl-benzoyl acid chloride was in toluene treated with hydrochloric acid to prepare 4-chloro-methyl-benzoyl acid followed by combining 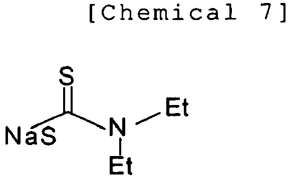 to prepare the iniferter defined by the following chemical formulae under methanol reflux:

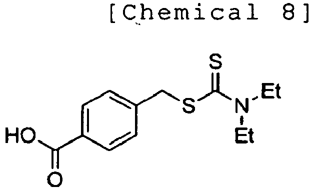

### 3) Iniferter fixing onto ferrite fine particle surface

The ferrite particles prepared in the above section 1) 40 mg (0.25mmol in the solid) was put into an 100ml eggplant type flask and the ferrite fine particles were precipitated with 2-methoxy-ethanol (Wako Pure Chemical Industries, Ltd.) followed by removing the supernatant liquor thereof. Then, the sequences comprising decantation/addition of 2-methoxy-ethanol/dispersion/ magnetic recovery were repeated to disperse the ferrite fine particle in toluene. Into this dispersion, the iniferter prepared in the section 2) 0.21g (0.75mmol) was added and was sonicated for 16 hours to fix the iniferter onto the ferrite fine particle surface. The ferrite fine particles after the sonication treatment were rinsed for 3 times by 2-methoxy-ethanol followed by dispersing 80ml of toluene and were reserved at 4 Celsius degree with close capping.

Now, an amount of inferter combined to the ferrite fine particle was obtained as follows:
The ferrite fine particle with fixing the iniferter was treated by the solution of 1M sodium hydroxide to leave the iniferter from the ferrite fine particle surface and then the supernatant thereof was measured by a spectrophotometer (Beckman, Inc., DU640) and the amount of the iniferter was obtained by the absorbance at 252.5 nm.

### 4) Living radical polymerization on iniferter fixed ferrite fine particle surface

The dispersion 20 ml (ferrite fine particle 10mg) was put into a 200 ml 4 ports flask equipped with a stirrer, a Liebig condenser, and a ceram rubber to pre-incubate at 70 Celsius degrees, 200 rpm for 1 hour.

While keeping the condition of 70 Celsius degrees and 200rpm, styrene 0.06g was added into the system the polymerization reaction was continued for 12 hours, and then styrene 0.02g, glycidylmethacrylate 0.01g, and etyleneglycoldimethacrylate 0.01g were added to further continue the polymerization reaction for another 12 hours. Further glycidylmethacrylate 0.02g was added and the polymerization reaction was continued for additional 12 hours. After the reaction was completed, the reaction solution was dispersed in toluene and the toluene was centrifugally removed. The sets of toluene dispersion and centrifugal separation were repeated 3 times to remove non-reacted monomers. The obtained polymer coated ferrite fine particles were observed and evaluated by the transmission electron microscope (TEM). An average particle diameter was to be 25. 6nm obtained from TEM images of 100 particles and a standard deviation thereof was to be 2.85 nm. A part of the solution (500ml) just after completion of the polymerization was transferred to a glass vial and a little amount of hydroquinone was added thereto and a conversion ratio was measured; the conversion ratio was determined to be 90.53%.

### (Example 2)

Using the ferrite fine particles and the iniferter prepared in Example 1, to the ferrite fine particle was the iniferter fixed using the same procedure in the Example 1 and while keeping 70 Celsius degrees at 200 rpm styrene 0.06g was added followed by 12 hours polymerization reaction and then styrene 0.02 g, glycidylmethacrylate 0.01g, and ethyleneglycoldimethacrylate 0.01g were added to further continue the polymerization reaction for 12 hours. Then, glycidylmethacrylate 0.02g was added and the polymerization reaction was continued for further 12 hours. After the reaction was completed, the reaction solution was dispersed in toluene and the toluene was centrifugally removed. The sets of toluene dispersion and centrifugal separation were repeated 3 times to remove non-reacted monomers. The obtained polymer coated ferrite fine particles were observed and evaluated by the transmission electron microscope (TEM). An average particle diameter was to be 23.8nm obtained from TEM images of 100 particles and a standard deviation thereof was to be 4.27nm. A part of the solution (500ml) just after completion of the polymerization was transferred to a glass vial and a little amount of hydroquinone was added thereto and a conversion ratio was measured; the conversion ratio was determined to be 99.63%.

### (Example 3)

Using the ferrite fine particles and the iniferter prepared in Example 1, to the ferrite fine particle was the iniferter fixed using the same procedure in the Example 1 and while keeping 70 Celsius degrees at 200 rpm styrene 0.02g, glycidylmethacrylate 0.01g, and ethyleneglycoldimethacrylate 0.01g were added to further continue the polymerization reaction for another 12 hours. Then, glycidylmethacrylate 0.02g was added and the polymerization reaction was continued for further 12 hours. After the reaction was completed, the reaction solution was dispersed in toluene and the toluene was centrifugally removed. The sets of toluene dispersion and centrifugal separation were repeated 3 times to remove non-reacted monomers. The obtained polymer coated ferrite fine particles were observed and evaluated by the transmission electron microscope (TEM). An average particle diameter was to be 20.6nm obtained from TEM images of 100 particles and a standard deviation thereof was to be 3.42nm. A part of the solution (500ml) just after completion of the polymerization was transferred to a glass vial and a little amount of hydroquinone was added thereto and a conversion ratio was measured; the conversion ratio was determined to be 99.93%.

The result of Examples 1-3 are summarized in Table 1. The conversion ratios were to be not less than 90% in any cases of Examples 1-3.

**[Table 1]**

| Example | Monomer1 Amounts(g) | Monomer2 Amounts(g) | Monomer2 Amounts(g) | Conversion Ratio(%) | Average Particle Size(nm) | Standard Deviation |
|---|---|---|---|---|---|---|
| Example 1 | St | St/GMA/EGDM | GMA | 90.53 | 25.6 | 2.85 |
| | 0.06 | 0.02/0.01/0.01 | 0.02 | | | |
| Example2 | St | St/GMA/EGDM | | 99.63 | 23.8 | 4.27 |
| | 0.06 | 0.02/0.01/0.01 | - | | | |
| Example3 | St/GMA/EGDM | GMA | | 99.93 | 20.6 | 3.42 |
| | 0.02/0.01/0.01 | 0.02 | - | | | |
| Ferrite Only | | | | | 19.0 | 3.23 |
| | - | - | - | - | | |

Fig. 4 shows the TEM photographs of the polymer coated particles obtained in the Examples and (a) is a TEM photograph of the polymer coated particles in Example 1; (b) is a TEM photograph of the polymer coated particles in Example 2; and (c) is a TEM photograph of the polymer coated particles in Example 3. In any cases of Fig. 4 (a) - (c), one ferrite fine particle is present at the center in each of the particle and it was confirmed that the ferrite fine particles were coated by the polymer. In addition, it was confirmed that the amounts of the monomer added were increased, the coating of the polymer became thicker and thicker such that the particle diameter of the polymer coated particles became larger and larger.

### (Example 4)

### 1) Magnetic fine particle

As magnetic fine particles to be the core, the ferrite particle as the magnetic fine particle was prepared according to the method described in Nature. Mater. 2004, 3, 891-895 as Example 1. The ferrite fine particles obtained were observed by the TEM and the average particle diameter thereof was 19nm and the standard deviation of the particle diameter was 3.23.

### 2) Synthesis of silane coupling agent combined iniferter

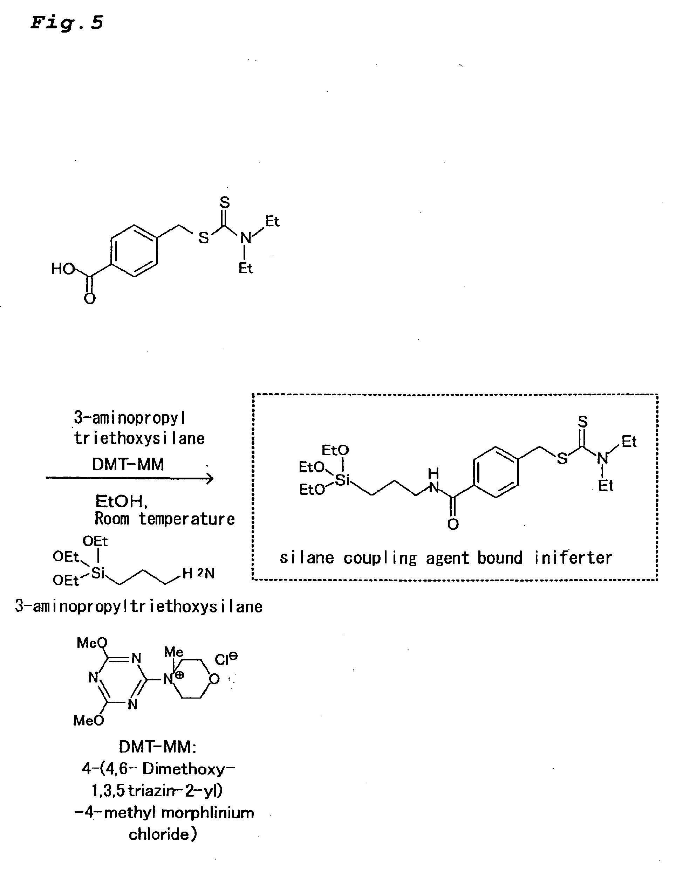

The iniferter was synthesized according to the procedure shown in Fig. 5. 4-chloro-methyl-benzoyl acid chloride was treated by hydrochloric acid in toluene to obtain 4-chloro-methyl-benzoyl acid. To the reaction product were sodium diethyl-thiocarbamate and sodium iodide acted to obtain the iniferter which was prepared and used in Example 1 shown in the chemical formulae (Chemical 8).

This iniferter, as shown in Fig. 5, using 4-(4,6-Dimethoxy-1,3,5-triazin-2-yl)-4-methyl-morpholin ium chloride (DMT-MM) as a dehydration condensation agent was combined with 3-amino-propyl-tri-ethoxy-silane was combined to prepare the iniferter provided by the following chemical formulae was obtained: 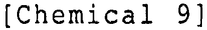 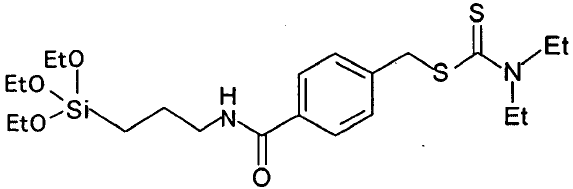 The iniferter is combined with the silane coupling agent such that the silanol group is formed by the hydrolysis thereof and is formed strong and stable bonds onto the inorganic fine particle surface such that this iniferter can be excellently fixed by the inorganic fine particle.

### 3) Iniferter fixing onto the ferrite particle surface

The ferrite fine particles prepared in the section 1) 90 mg (0.56 mmol in the solid) were put into an 100 ml glass vial and were precipitated in 2-propanol (KOKUSAN CHEMICAL Co. Ltd.,) followed by repeating 3 sets of decantation/2-propanol addition/dispersion/magnetic recovery to remove oleic acid rest on the ferrite fine particle surface. The ferrite fine particles were dispersed in nitrogen gas substituted toluene (KOKUSAN CHEMICAL Co. Ltd.,) 8ml followed by adding 2ml of dimethyl-sulfoxide (Nakarai Tesque, INC.) solution with dissolving 0.15g of thio-malic acid (Tokyo Chemical Industry CO., LTD.) and further followed by 4 hours sonication. The ferrite fine particles were rinsed by 5 ml of 2-methoxy-ethanol for 5 times to remove non-reacted thio-malic acid. Subsequently, the ferrite fine particles were rinsed by methanol for 3 times and were dispersed in the mixed solvent of toluene:methanol=3:1 (volume ratio) 20 ml by the sonication treatment. The iniferter prepared in the section 2) 0.59g (1.25 mmol) was added thereto and were subjected to the sonication treatment for 16 hours to fix the iniferter onto the ferrite fine particles through a ligand exchange reaction.

After the completion of the reaction, rinsing by 3 times of 2-methoxy ethanol, 5 times of methanol was made to remove leaving thiomalic acid and non-reacted iniferter. Subsequently, the iniferter fixed ferrite fine particles were dispersed in methanol of 90ml and were closely capped and were kept at 4 Celsius degrees. The ferrite fine particles were perfectly dissolved by treating 6M HCL solution at 98 Celsius degrees and the precipitated ingredient at this stage was dissolved in sodium hydroxide solution in order to measure an absorbance at 252.5nm by the spectrophotometer (Beckman Co. DU640) for quantitative measurement of the iniferter which was fixed on the ferrite fine particles. As the result, the iniferter was fixed to the ferrite particles to be 87.9nmol per the ferrite particles of 1mg.

### 4) Living radical polymerization on iniferter fixed ferrite fine particle surface

The solution obtained in the section 3) 10ml (ferrite fine particle 10mg) was put into an 20 ml 4-neck flask and methanol 10ml was added thereto to make the total amount to be 20ml. A stirrer, a Liebig condenser, and a cerum rubber were equipped to conduct preincubation at 70 Celsius degrees, 200rpm for 1 hour. While keeping at 70 Celsius degrees and 200rpm, styrene 0.02g, glycidylmethacrylate 0,01g, and ethyleneglycoldimethacrylate 0.01g were added to the system and the polymerization reaction was continues for 18 hours. After the completion of the reaction, the reaction mixture was dispersed into toluene and the toluene was centrifugally removed. The operation of the dispersion to toluene and the centrifugal separation was repeated for 3 times to remove the non-reacted monomers. The obtained polymer coated ferrite particles were observed and evaluated by TEM.

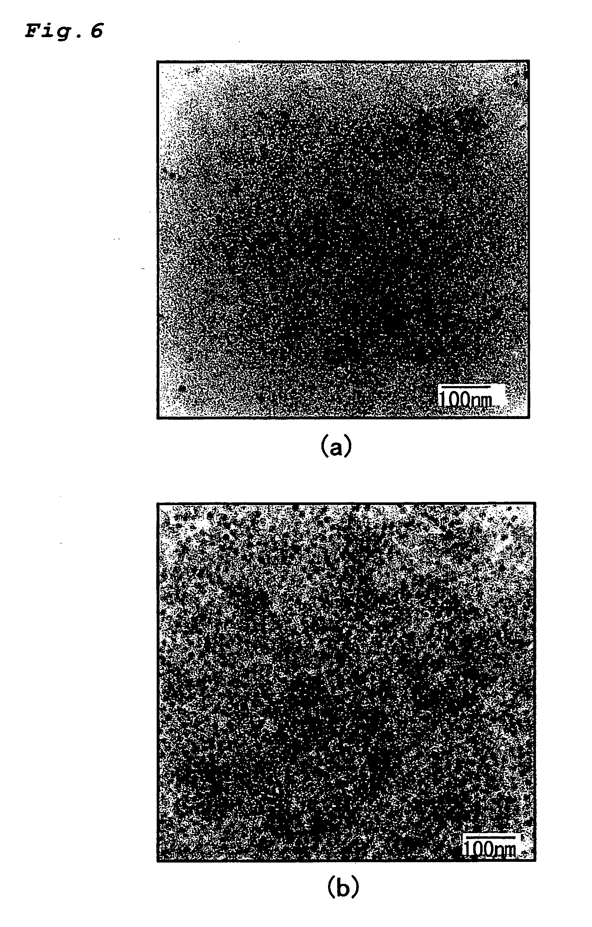

Fig. 6 (a) shows a TEM view of the obtained polymer coated ferrite fine particle obtained in Example 4. On the other hand, a part of the solution just after the reaction (500ml) was moved to a glass vial of 5ml and a little amount of hydroquinone was added quickly to measure the conversion ratio.

### (Example 5)

The solution 10 ml obtained in the section 3) of Example 3 (ferrite fine particle 10mg) was rinsed by toluene and were dispersed in 20ml of toluene. The dispersion was put into a 4-neck flask quipped with a stirrer, a riebig's condenser, and a cerum rubber to pre-incubate at 70 Celsius degrees and 200rpm for 1 hour. While keeping at 70 Celsius degrees and 200rpm, styrene 0.02g, glycidylmethacrylate 0,01g, and ethyleneglycoldimethacrylate 0.01g were added to the system and the polymerization reaction was continues for 18 hours. Subsequently 0.02g of glycidylmethacrylate was added to continue the polymerization reaction for another 18 hours. After the completion of the reaction, the reaction mixture was dispersed into toluene and the toluene was centrifugally removed. The operation of the dispersion to toluene and the centrifugal separation was repeated for 3 times to remove the non-reacted monomers. The obtained polymer-coated ferrite particles were observed and evaluated by TEM.

Fig. 6 (b) shows a TEM view of the obtained polymer coated ferrite fine particle obtained in Example 5. On the other hand, a part of the solution just after the reaction (500ml) was moved to a glass vial of 5ml and a little amount of hydroquinone was added quickly to measure the conversion ratio.

The results of Examples 4 and 5 are listed in Table 2. The conversion ratios in Examples 4 and 5 were to be not less than 85%. The average particle diameter shown in Table 2 was calculated from measured values of 100 particles in the TEM view shown in Fig. 6.

**[Table 2]**

| Example | Monomer1 Amounts(g) | Monomer2 Amounts(g) | Solvent | Conversion Ratio(%) | Average Particle Size(nm) | Standard Deviation |
|---|---|---|---|---|---|---|
| Example4 | St/GMA/EGDM | GMA | Methanol | 86.89 | 21.14 | 1.22 |
| | 0.02/0.01/0.01 | 0.02 | | | | |
| Example5 | St/GMA/EGDM | GMA | Toluene | 100 | 19.98 | 2.05 |
| | 0.02/0.01/0.01 | 0.02 | | | | |

As the above results, the living radical polymerization using the iniferter including the silane coupling agent also provided the polymer-coated ferrite fine particles while keeping high conversion ratios. The TEM view obtained for the polymer coated ferrite fine particles is provided in Fig. 6 (b). From this view, it is observed that the ferrite fine particles are coated one by one with the polymer.

### (Example 6)

The preparation of the ferrite fine particles were conducted by the steps of oxidizing a part of Fe (II) ions by adding nitric acid to the solution of iron chloride to form and grow iron oxide particles in a spinel structure in water and then rinsing to obtain the dispersion solution of ferrite particles of an average particle diameter of 40nm. By this preparation method of the magnetic fine particles, the particle diameter formed may be controlled in the range up to several hundreds nm and the ferrite fine particles having matched particle diameters and being monodispersed ferrite fine particle were prepared in a water-dispersed form.

To this dispersion solution, the iniferter of [Chemical 10] synthesized in Example 4 was added to fix the surface of the ferrite fine particles followed by removing excess iniferter with rinsing. To the dispersion solution of the iniferter fixed ferrite fine particles, styrene, glycidylmethacrylate, and ethyleneglycoldimethacrylate were added as monomers to conduct the polymerization. Subsequently glycidyldimethacrylate and glycerolmethacrylate were added to continue the polymerization. After these polymerizations, the reaction solution was dispersed in Milli-Q aqueous solution and the water was centrifugally removed. The dispersion to Milli-Q aqueius solution and the centrifugal separation operation was repeated for 3 times to remove non-reacted monomers. The fine particles as such obtained were observed by TEM, and in the result, it was observed that the polymer coated fine particles which are one by one coated with the polymer of 2 nm were formed. In addition, the thickness of the polymer coating was thicken by altering polymerization conditions using this method.

### (Example 7)

### 1) Preparation of ferrite fine particles

The ferrite particle used for the inorganic fine particle corresponding to the core of the polymer coated magnetic fine particle as prepared according to the method described in J. Magn. Mater. 310. , 2408-2410, 2007 and iron chloride (II) was oxidized by sodium nitrate in 0.1M sodium hydroxide to initiate the reaction. After 2 hours, the ferrite fine particles obtained were observed by using a transmission electron microscope (TEM, H-7500, Hitachi High-Technologies Corporation Ltd.) and fine particles having edged structure were observed. In order to make the fine particles having edged structure to be more spherical shape, to the solution after the 2 hours reaction ammonium chloride was added to the final concentration of 0.2M followed by the reaction for 2 hours under nitrogen atmosphere for chelating the ammonium ions to Fe ions on the ferrite surface and the ferrite fine particles were prepared by continuing the reaction for 16 hours with closely capping.

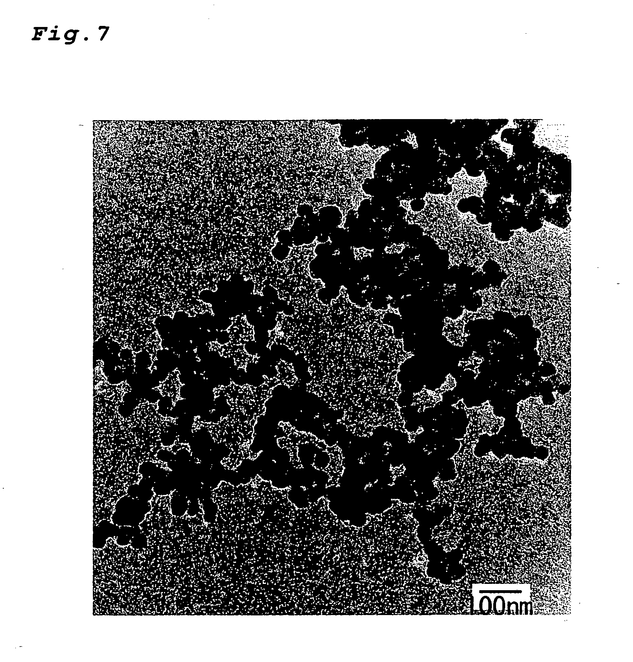

The ferrite fine particles obtained were observed by TEM. As the result, as shown in Fig. 7, it was confirmed that almost spherical ferrite fine particle of the particle diameter of 40nm were prepared. This is interpreted that the ammonium ions was coordinated to the Fe ions on the ferrite surface during the growth of the crystal to prevent the crystal growth and the result thereof the spherical crystal was formed.

### 2) Iniferter fixing to the ferrite fine particle surface

The ferrite fine particles prepared by the above described in the section 1), the iniferter defined by the following chemical formula which was synthesized in Example 4 was fixed by the following processes:

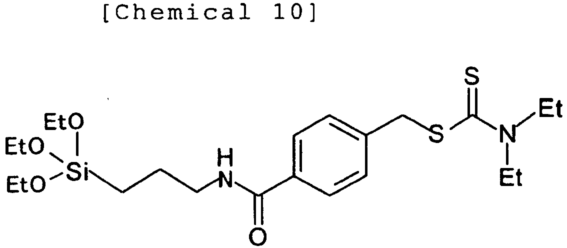

First, the ferrite fine particles prepared in the above 1) 40mg (Solid 0.25mmol) were dispersed in N, N-dimethylformamide (KISHIDA CHEMICAL Co., Ltd.). The iniferter indicated by the above chemical formula 0.26g (0.75mmol) was dissolved in N, N-dimethylformamide and the solution was added to the dispersion of the ferrite fine particles followed by sonication for 16 hours to fix the iniferter onto the ferrite fine particles. The ferrite fine particles after the sonication treatment were rinsed by N, N-dimethylformamide for 3 times and resuspended in 40ml of N, N-dimethylformamide and were reserved at 4 Celsius degrees with closely capping. The iniferter fixed ferrite fine particles are hereunder referred as "ferrite coating substance 1".

Here, in the present Example, N, N-dimethylformamide was selected as the solvent which was able to preferably disperse the ferrite fine particles while being able to preferably dissolve the iniferter and was able to maintain the dispersion of the ferrite fine particles under the iniferter fixing process even in the influence of the residual magnetic field that became larger and larger as the size of the magnetic particles became larger (20nm ore more).

Here, the amount of the iniferter bound to the ferrite fine particle was obtained as described below. The iniferter fixed ferrite fine particles were substituted by toluene and dried to powder; then the powder was treated by 6M hydrogen chloride to dissolve the ferrite so as to precipitate the iniferter; then the supernatant was centrifugally separated and the precipitate was dispersed in 1M sodium hydroxide. The absorbance of the solution was measured by the spectrophotometer (Beckman Co. Ltd., DU640) and the amount of the iniferter combined to the ferrite fine particles was determined from the absorbance at 252.5nm. The fixed amount of the iniferter obtained was to be about 400nmol/mg (ferrite).

### 4) Living radical polymerization on the iniferter fixed ferrite fine particle surface

To the dispersion 10ml (ferrite fine particle of 10mg) of the iniferter fixed ferrite fine particles obtained in the above 2), N, N-dimethylformamide 90ml was added to 100 ml and then was put into a 4-neck flask of 200ml equipped with a stirrer, a Liebig condenser, and cerum rubber to pre-incubate at 70 Celsius degrees, 300rpm for 1 hour. While keeping at 70 Celsius degrees and 300rpm, styrene 0.087g, glycidylmethacrylate 0.0097g, divinyl benzene 0.003g were added and the polymerization reaction was conducted for 24 hours. After the reaction, the solvent was centrifugally removed and rinsed by N, N-dimethylformamide for 3 times followed by resuspending in 10 ml of N, N-dimethylformamide and was kept at 4 Celsius degrees. The fine particles obtained by the above procedures are referred hereafter to "ferrite coating substance 2".

To the solution, 90ml of N, N-dimethylformamide was added, and was further added glycidylmethacrylate 0.0097g and ethyleneglycoldimethacrylate 0.0003g were added to conduct the polymerization reaction for 24 hours. After completion of the reaction, the solvent was removed by the centrifugal separation followed by 3 times rinsing with N, N-dimethylformamide and then particles were dispersed in 10ml of N, N-dimethylformamide. The dispersion was kept at 4 Celsius degrees. The fine particles obtained by the above procedures are referred hereafter to "ferrite coating substance 3".

With respect to the ferrite coating substances 1-3, each particle diameters in N, N-dimethylformamide were measured by a Dynamic Light Scattering Method DLS) and were observed and examined by the transmission electron microscope (TEM). The table shown below summarizes the result of measurements about the ferrite coating substances 1-3 with respect to a weight particle size (Dw), a numeral particle size (Dn) and the ratio thereof (Dw/Dn). As shown in the table below, the value of Dw/Dn, which indicates dispersion level of the particles, are almost 1 (one) such that it was indicated that the mono-dispersion state was achieved.

**[Table 3]**

| | Dw(nm) | Dn(nm) | Dw/Dn |
|---|---|---|---|
| Ferrite Coating Substance 1 | 53.5 | 49.1 | 1.09 |
| Ferrite Coating Substance 2 | 57.8 | 51.8 | 1.12 |
| Ferrite Coating Substance 3 | 67 | 61.9 | 1.08 |

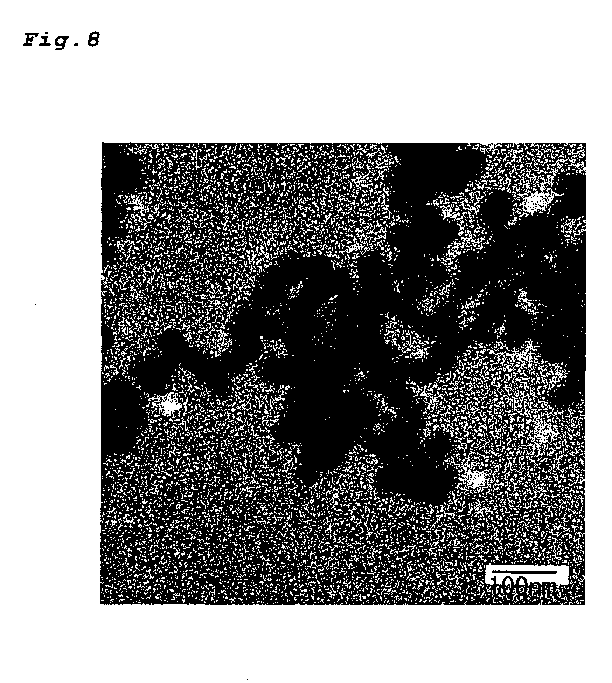

Fig. 8 shows a transmission electron microscope of the ferrite coating substance 3. As shown in Fig. 8, it was confirmed that the ferrite fine particle of 40nm was coated one by one with the polymer.

The method as described above, for example, it was confirmed that the ferrite fine particle of 100nm with the polymer coating of 20nm thickness were produced. In addition, the method as described above, more even polymer coating may be possible to the inorganic fine particles having more large particle diameters such as 4nm-500nm.

### (Comparative Example)

The comparative example was conducted faithfully according to the description of the example 1 described in 0052-0053 columns of the Patent Literature 1 (Japanese Patent Laid-Open No. 2006-328309, entitled "Magnetic polymer particles and Method for preparing the same" in order to compare the Examples of the present invention.

Magnetic fluid (FERRICOLOID, HC-50, Taiho Industry) 3.0g was put into an 100 ml glass vial and was kept at 70 Celsius degrees for about 1 week to remove the solvent kerosene. The obtained magnetic fine particles of 0. 6g was put into a 300ml round bottom flask and a mixed solvent of toluene (KOKUSAN CHEMICALS Co. Ltd.):methanol (Kishida Chemical Co. Ltd.)=4:1 (volume ratio) 200ml was added thereto followed by sonication treatment for dispersion of the magnetic particles. After that, 1.0g of 2-(4-chloro-sulfonyl-phenyl)ethyltrimethoxysilane (fluorochem Co. Ltd.) was added to react at 70 Celsius degrees for 24 hours. After the completion of the reaction, toluene rinsing was made for 5 times and after removing the solvent sufficiently, the particles were substantially dried by keeping thereof in a desiccator for 3 days to obtain the magnetic particles of 0.2g to which a polymerization initiator group was introduced.

The magnetic particles as such obtained 0.14g and styrene (Wako Pure Chemical Industries Ltd. purified by evaporation under reduced pressure) 1.02g xylene (Kishida Chemical Co., Ltd.) 0. 6g were put into a 200ml 4 ports round bottom flask, and copper (I) bromide (Sigma-Aldrich Co.) 9mg and 4,4'-dinonyl-2,2'-dipyridyl (Sigma-Aldrich Co.) 50mg were added and then oxygen in the solution was removed by flowing nitrogen gas for 1 hour followed by stirring at 110 Celsius degrees also at a rotation rate of 200rpm for 10 hours to conduct the reaction.

The polymer coated magnetic fine particles as obtained above was rinsed by toluene for 5 times and then were dispersed in tetrahydrofuran (THF) (Nakarai Tesque Inc. low water solvent) 10ml and was kept at 4 Celsius degrees in closely capped 20ml glass vial. A particle size of the obtained sample was measured in THF by PAR-1000 from Otsuka Electrics Co. , Ltd. On the other hand, the sample was added on the corrosion mesh with evaporated carbon and the state after dried was observed by a transmission electron microscope (Hitachi High-Technologies Corporation Ltd. H-7600). The average particle diameter calculated from the measured values from 100 particles in the obtained TEM view was 205.9±177.1 nm.

As results of the particle size in THF by the light scattering method about the obtained particles, the values of Dn=21.7±4.4 nm as the number particle size and Dw=3133.8 ± 2354.2 nm as the weight particle size were obtained. From these results, the value Dw/Dn which indicates the dispersion degree of the particles was determined to be 140.9; the value is fairly different from the value=1 which indicates the mono-dispersion state. Therefore, the polymer coated magnetic fine particles was assumed to be ensembles in which several particles are aggregated each other by the polymer rather than the mono-dispersed state.

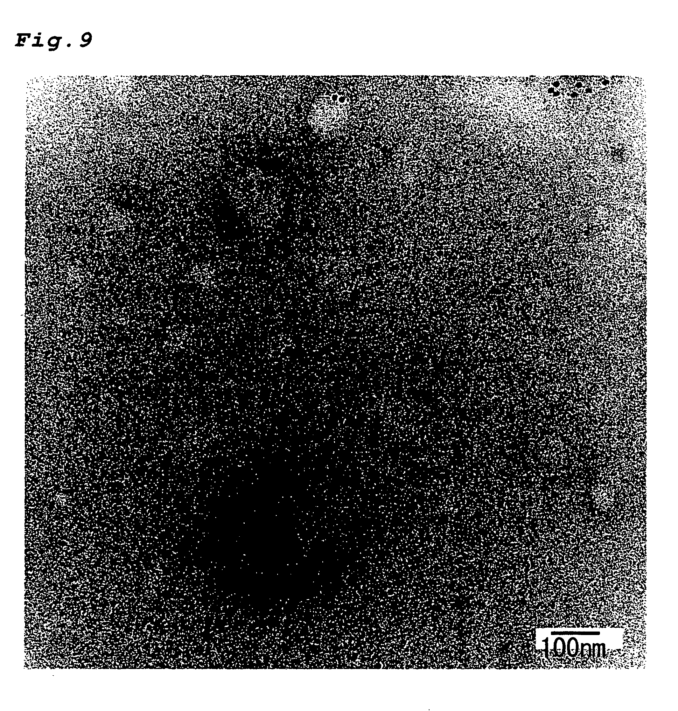

A transmission electron microphotograph of the polymer coated magnetic fine particle is shown in Fig. 9. It was confirmed that one particle was formed by aggregating magnetic particles with the polymer. In addition, many fine particles being not coated by the polymer and even the magnetic particle alone were observed. From these results, the polymer coated magnetic fine particles obtained according to the polymerization method of Patent Literature 1 have uneven shapes and hence, it is expected that the efficiency of the polymerization reaction may be not so high. As described above, it is shown that the method disclosed in Patent Literature 1 can not produce the polymer coated magnetic fine particles which are coated by the polymer one by one.

### INDUSTRIAL APPLICABILITY

According to the present invention, the polymer coated magnetic fine particles which are coated thinly by the polymer one by one may be provided by forming the grafted chain on the magnetic fine particle surface while controlling the polymerization. Furthermore, the polymer coated magnetic fine particles having large magnetization in spite of the small particle diameters thereof may be produced by coating thinly the magnetic fine particles having well controlled particle size, well matched particle diameters and being sufficiently fine win the range assuring to provide the magnetization as the ferromagnetic substance. The polymer coated fine particle as such produced may be coated the particle one by one such that the particle may be expected to have wide applications at various industrial fields such as for example, but not limited to, medical applications such as an affinity carrier, a carrier for biosensor, an MRI imaging agent, and a DDS carrier or application for biotechnologies.

### BRIEF DESCRIPTION OF DRAWINGS

[Fig. 1] A flowchart of the process in preparation of the polymer coated magnetic fine particles according to one embodiment of the present invention.
[Fig. 2] A schematic illustration of the coating the magnetic fine particles by the polymer with fixing the iniferter on the ferrite fine particle surface.
[Fig. 3] A synthesis process for the iniferter used in the polymer coated magnetic fine particles according to the present invention.
[Fig. 4] Transmission electron microscope (TEM) views of the polymer coated particles obtained in Examples 1-3 of the present invention.
[Fig. 5] A synthesis process of the silane coupling agent containing iniferter used for the polymer coated inorganic fine particles of the present invention.
[Fig. 6] TEM views of the polymer coated particles obtained in Examples 4 and 5 of the present invention.
[Fig. 7] A TEM view of the ferrite fine particle prepared in Example 7 of the present invention.
[Fig. 8] A TEM view of the polymer coated particle prepared in Example 7 of the present invention.
[Fig. 9] A TEM view of the polymer coated fine particle of the comparative example against the present invention.

### DESCRIPTION OF SIGNS

102-preparation process of inorganic fine particle, 104-rinse process, 106-dispersion process, 108-iniferter addition process, 110-sonication process, 112-rinse process, 114-solvent dispersion process, 116-polymerization process (1), 118-polymerization process (2), 120-polymerization process (3), 122-rinse process, 124-polymer coated inorganic fine particle, 202-inorganic fine particle, 204-initiator, 206-first polymer, 208-second polymer

## Claims

1. A polymer coated magnetic fine particle which comprises a magnetic fine particle having an average particle size between 4 nm and 500 nm, wherein the value of the ratio of the standard deviation of the particle size distribution to the average particle size is not more than 0.2, and a polymer layer covering the magnetic fine particle **characterized in that** an iniferter defined by a following chemical formula; 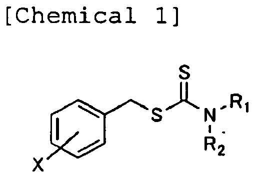 (wherein X is a hydrophilic atomic group being capable of binding to a surface of the magnetic fine particle, R1 and R2 are each independently selected from a mono-valent hydrocarbyl group which is formed by removing one hydrogen atom from hydrocarbon) is fixed on a surface of a magnetic fine particle via an atomic group X such that a grafted chain is formed on the surface of the magnetic fine particle by a polymerization reaction by using the iniferter as an initiator.

2. The polymer coated magnetic fine particle of claim 1, wherein X of the iniferter is at least one kind selected from the group consisting of a carboxyl group, a mercapto group, a phosphoric group, a phosphite group, a sulfonic group, a phenolic group, atomic groups selected form a carboxylic group, a mercapto group, a phosphoric group, a phosphite group, a sulfonic group, and a phenolic group, or wherein X of the iniferter is an atomic group being capable of forming a silanol group by hydrolysis.

3. The polymer coated magnetic fine particle of claim 1 or 2, wherein the thickness of the polymer layer is not more than 10 nm, and/or wherein a polymer coating covers individually the magnetic fine particle one by one.

4. The polymer coated magnetic fine particle of any one of claims 1-3, wherein a coating of the polymer layer includes a block copolymer which is formed by a block co-polymerization of at least 2 polymers.

5. The polymer coated magnetic fine particle of claim 4, wherein at least one block of the block copolymer comprises a functional group for fixing a biomaterial, and/or wherein the magnetic fine particle is a magnetic fine particle.

6. The polymer coated magnetic fine particle of claim 5, wherein the magnetic fine particle is a ferrite fine particle.

7. A method for preparing a polymer coated magnetic fine particle having an average particle size between 4 nm and 500 nm, wherein the value of the ratio of the standard deviation of the particle size distribution to the average particle size is not more than 0.2, comprising the steps of:
fixing an iniferter to a surface of an magnetic fine particle by adding the iniferter to a dispersion solution of the magnetic fine particle, the iniferter being defined by a chemical formula; 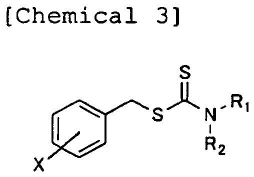 (wherein X is a hydrophilic atomic group being capable of binding to a surface of the magnetic fine particle, R₁ and R₂ are each independently selected from a mono-valent hydrocarbyl group which is formed by removing one hydrogen atom from hydrocarbon); and
coating the magnetic fine particle individually one by one by a polymer layer by adding a monomer to the dispersion solution of the magnetic fine particle to which the iniferter is fixed and then forming a grafted chain on a surface of the magnetic fine particles though a polymerization reaction using the iniferter as an initiator.

8. The method of claim 7, wherein a polar organic solvent is used as solvent for the polymerization reaction of the dispersion solution of the magnetic fine particle using the iniferter as the initiator, wherein the polar organic solvent is preferably N, N-dimethylformamide.

9. The method of claim 7, further comprising the step of preparing the ferrite particle as the magnetic fine particle by oxidizing iron (II) chloride with sodium nitrate in an aqueous sodium hydroxide solution followed by adding a solution for chelating Fe ions and further conducting a reaction to obtain the ferrite fine particle in a spherical shape, wherein the solution added to obtain the ferrite fine particle in the spherical shape is preferably an ammonium chloride solution.

## Patentansprüche

1. Mit Polymer beschichtetes magnetisches feines Partikel, welches ein magnetisches feines Partikel mit einer durchschnittlichen Partikelgröße zwischen 4 nm und 500 nm enthält, wobei der Wert des Verhältnisses der Standardabweichung der Partikelgrößenverteilung zu der durchschnittlichen Partikelgröße nicht mehr als 0,2 beträgt, und, welches eine Polymerschicht enthält, welche das magnetische, feine Partikel umhüllt, **dadurch gekennzeichnet**, auf der Oberfläche eines magnetischen feinen Partikels über eine Atomgruppe X ein Iniferter gemäß der nachfolgenden chemischen Formel: 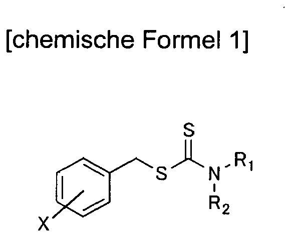 (worin X eine hydrophile Atomgruppe ist, welche an eine Oberfläche des magnetischen feinen Partikels binden kann, R₁ und R₂ jeweils unabhängig voneinander ausgewählt sind aus monovalenter Hydrocarbylgruppe, welche durch Entfernen eines Wasserstoffatoms von einem Kohlenwasserstoff gebildet worden ist), fixiert ist, so dass eine gepfropfte Kette auf der Oberfläche des magnetischen feinen Partikels durch eine Polymerisationsreaktion unter Verwendung des Iniferters als Initiator gebildet wird.

2. Mit Polymer beschichtetes magnetisches feines Partikel nach Anspruch 1, wobei X des Iniferters wenigstens eine Art ausgewählt aus der Gruppe bestehend aus einer Carboxylgruppe, einer Mercaptogruppe, einer Phosphorsäuregruppe, einer Phosphitgruppe, einer Sulfonsäuregruppe, einer Phenolgruppe, Atomgruppen ausgewählt aus einer Carboxylgruppe, einer Mercaptogruppe, einer Phosphorsäuregruppe, einer Phosphitgruppe, einer Sulfonsäuregruppe und einer Phenolgruppe ist, oder, wobei X des Iniferters einer Atomgruppe ist, die durch Hydrolyse eine Silanolgruppe bilden kann.

3. Mit Polymer beschichtetes magnetisches feines Partikel nach Anspruch 1 oder 2, wobei die Dicke der Polymerschicht nicht mehr als 10 nm beträgt, und/oder, wobei eine Polymerbeschichtung das magnetische feine Partikel eines nach dem anderen individuell umhüllt.

4. Mit Polymer beschichtetes magnetisches feines Partikel nach einem der Ansprüche 1 bis 3, wobei eine Beschichtung der Polymerschicht ein Bloco-Polymer enthält, welches durch eine Block-Copolymerisation von wenigstens zwei Polymeren gebildet wird.

5. Mit Polymer beschichtetes magnetisches feines Partikel nach Anspruch 4, wobei wenigstens ein Block des Block-Copolymers eine funktionelle Gruppe zum Fixieren eines Biomaterials enthält, und/oder, wobei das magnetische feine Partikel ein magnetisches feines Partikel ist.

6. Mit Polymer beschichtetes magnetisches feines Partikel nach Anspruch 5, wobei das magnetische feine Partikel ein feines Ferrit-Partikel ist.

7. Verfahren zum Herstellen eines mit Polymer beschichteten magnetischen feinen Partikels mit einer durchschnittlichen Partikelgröße zwischen 4 nm und 500 nm, wobei der Wert des Verhältnisses der Standardabweichung der Partikelgrößenverteilung zu der durchschnittlichen Partikelgröße nicht mehr als 0,2 beträgt, wobei das Verfahren die nachfolgenden Schritte umfasst:
Fixieren eines Iniferters an eine Oberfläche eines magnetischen feinen Partikels durch Zugabe des Iniferters zu einer Dispersionslösung des magnetischen feinen Partikels, wobei der Iniferter durch die nachfolgende chemische Formel definiert ist; 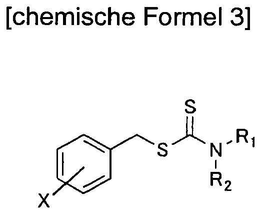 (worin X eine hydrophile Atomgruppe ist, welche an einer Oberfläche des magnetischen feinen Partikels binden kann, R₁ und R₂ jeweils unabhängig voneinander aus einer monovalenten Hydrocarbylgruppe, welche durch Entfernen eines Wasserstoffatoms aus Kohlenwasserstoff gebildet wird, ausgewählt werden), und
Beschichten des magnetischen feinen Partikels eines nach dem anderen individuell durch eine Polymerschicht durch Zugabe eines Polymers zu der Dispersionslösung des magnetischen feinen Partikels, an welches der Iniferter fixiert ist, und dann Formen einer gepfropften Kette auf eine Oberfläche der magnetischen feinen Partikel durch eine Polymerisationsreaktion unter Verwendung des Iniferters als ein Initiator.

8. Verfahren nach Anspruch 7, wobei ein polares organisches Lösungsmittel als Lösungsmittel für die Polymerisationsreaktion der Dispersionslösung des magnetischen feinen Partikels unter Verwendung des Iniferters als den Initiator verwendet wird, wobei das polare organische Lösungsmittel bevorzugt N, N-Dimethylformamid ist.

9. Verfahren nach Anspruch 7, des Weiteren umfassend den Schritt des Herstellens des Ferrit-Partikels als das magnetische feine Partikel durch Oxidieren von Eisen(11)chlorid mit Natriumnitrat in einer wässrigen Natriumhydroxidlösung gefolgt von der Zugabe einer Lösung zum Chelatieren von FeIonen und des Weiteren Durchführen einer Reaktion, um das feine Ferrit-Partikel in einer Kugelform zu erhalten, wobei die zugegebenen Lösung zum Erhalten des feinen Ferrit-Partikels in der Kugelform vorzugsweise eine Ammoniumchloridlösung ist.

## Revendications

1. Particule fine magnétique revêtue d'un polymère, qui comprend une particule fine magnétique ayant un diamètre moyen de particule entre 4 nm et 500 nm, la valeur du rapport de l'écart type de la distribution des diamètres de particules au diamètre moyen de particule étant non supérieure à 0,2, et une couche polymère couvrant la particule fine magnétique, **caractérisée en ce qu'**un iniferter défini par la formule chimique suivante : 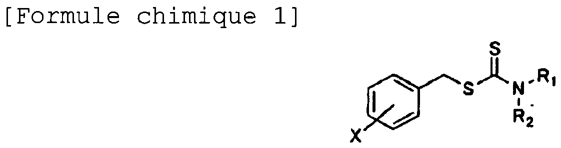 (dans laquelle X représente un groupe atomique hydrophile capable de se lier à une surface de la particule fine magnétique, R₁ et R₂ sont choisis chacun indépendamment parmi des groupes hydrocarbyle monovalents qui sont formés par élimination d'un atome d'hydrogène d'un hydrocarbure) est fixé sur une surface d'une particule fine magnétique par l'intermédiaire d'un groupe atomique X de telle sorte qu'une chaîne greffée soit formée sur la surface de la particule fine magnétique par une réaction de polymérisation en utilisant l'iniferter comme initiateur.

2. Particule fine magnétique revêtue d'un polymère suivant la revendication 1, dans laquelle X de l'iniferter représente au moins un type choisi dans le groupe consistant en un groupe carboxyle, un groupe mercapto, un groupe phosphorique, un groupe phosphite, un groupe sulfonique, un groupe phénolique, des groupes atomiques choisis entre un groupe carboxylique, un groupe mercapto, un groupe phosphorique, un groupe phosphite, un groupe sulfonique et un groupe phénolique, ou dans laquelle X de l'iniferter représente un groupe atomique capable de former un groupe silanol par hydrolyse.

3. Particule fine magnétique revêtue d'un polymère suivant la revendication 1 ou 2, dans laquelle l'épaisseur de la couche polymère est non supérieure à 10 nm, et/ou dans laquelle un revêtement polymère couvre individuellement une par une les particules fines magnétiques.

4. Particule fine magnétique revêtue d'un polymère suivant l'une quelconque des revendications 1 à 3, dans laquelle un revêtement de la couche polymère comprend un copolymère séquencé qui est formé par une copolymérisation séquencée d'au moins 2 polymères.

5. Particule fine magnétique revêtue d'un polymère suivant la revendication 4, dans laquelle au moins une séquence du copolymère séquencé comprend un groupe fonctionnel pour la fixation d'un biomatériau, et/ou dans laquelle la particule fine est une particule fine magnétique.

6. Particule fine magnétique revêtue d'un polymère suivant la revendication 5, dans laquelle la particule fine magnétique est une particule fine de ferrite.

7. Procédé pour préparer une particule fine magnétique revêtue d'un polymère ayant un diamètre moyen de particule entre 4 nm et 500 nm, la valeur du rapport de l'écart type de la distribution des diamètres de particules au diamètre moyen de particule étant non supérieure à 0,2, comprenant les étapes de :
fixation d'un iniferter à une surface d'une particule fine magnétique en ajoutant l'iniferter à une solution de dispersion de la particule fine magnétique, l'iniferter étant défini par une formule chimique : 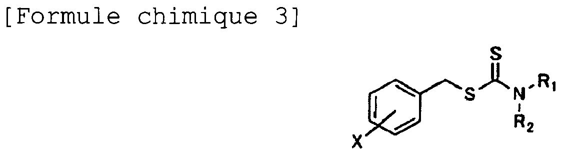 (dans laquelle X représente un groupe atomique hydrophile capable de se lier à une surface de la particule fine magnétique, R₁ et R₂ sont choisis chacun indépendamment parmi des groupes hydrocarbyle monovalents qui sont formés par élimination d'un atome d'hydrogène d'un hydrocarbure) ; et
de revêtement des particules fines magnétiques individuellement une par une par une couche polymère en ajoutant un monomère à la solution de dispersion de la particule fine magnétique à laquelle l'iniferter est fixé et ensuite en formant une chaîne greffée sur une surface des particules fines magnétiques par une réaction de polymérisation utilisant l'iniferter comme initiateur.

8. Procédé suivant la revendication 7, dans lequel un solvant organique polaire est utilisé comme solvant pour la réaction de polymérisation de la solution de dispersion de la particule fine magnétique en utilisant l'iniferter comme initiateur, le solvant organique polaire étant de préférence le N,N-diméthylformamide.

9. Procédé suivant la revendication 7, comprenant en outre l'étape de préparation de la particule de ferrite comme particule fine magnétique par oxydation de chlorure de fer(II) avec du nitrate de sodium dans une solution aqueuse d'hydroxyde de sodium puis par addition d'une solution pour chélater les ions Fe et en outre de conduite d'une réaction pour obtenir la particule fine de ferrite sous forme sphérique, la solution ajoutée pour obtenir la particule fine de ferrite sous forme sphérique étant de préférence une solution de chlorure d'ammonium.
